# EUROPÄISCHE PATENTSCHRIFT

(11) **EP 1 275 545 B1**
(45) Veröffentlichungstag und Bekanntmachung des Hinweises auf die Patenterteilung: **15.11.2006**
(21) Anmeldenummer: 02014205.5
(22) Anmeldetag: 26.06.2002
(51) Int. Cl.: B60J 10/10

(54) **Fahrzeugdach mit mindestens zwei festen Dachteilen**
Vehicle roof with at least two rigid roof elements
Toit pour véhicule avec au moins deux éléments rigides pour le toit

(30) Priorität: 12.07.2001 DE 20111650 U
(43) Veröffentlichungstag der Anmeldung: 15.01.2003
(73) Patentinhaber: Wilhelm Karmann GmbH, 49084 Osnabrück (DE)
(72) Erfinder: Bunsmann, Winfried, 49143 Bissendorf (DE); Russke, Klaus, 49143 Bissendorf (DE)
(74) Vertreter: Ouzman, Beverley Nicola Claire

(56) Entgegenhaltungen:
- DE-C- 3 924 036
- DE-C- 19 830 875
- US-A- 5 961 177

## Beschreibung

Die Erfindung betrifft ein Fahrzeugdach mit mindestens zwei festen Dachteilen gemäß der im Oberbegriff des Schutzanspruches 1 näher definierten Art.

Aus der DE 199 24 792 C1 ist ein solches gattungsgemäßes Fahrzeugdach mit wenigstens zwei ausstellbaren und verschiebbaren starren Deckelelementen bekannt. Die Deckelelemente dienen zum wahlweisen Verschließen oder wenigstens teilweisen Freigeben von einer Dachöffnung. Seitlich entlang der Dachöffnung sind längs verlaufende Wasserrinnen vorgesehen. In Fahrtrichtung ist an einer vorderen Endseite eines Deckelelementes eine wulstförmige Dichtung quer angeordnet, die bei geschlossenem Dach einen Spalt zwischen benachbarten Deckelelementen dichtend ausfüllt. Vor der wulstförmigen Dichtung ist eine primäre Rinne und eine sekundäre Rinne vorgesehen. Die Anordnung der beiden Rinnen ist derart, daß zwei kaskadenförmig angeordnete Rinnen ausgebildet werden, wobei die Endseiten der primären und sekundären Rinne in seitlich entlang der Dachöffnung längs verlaufende Wasserrinnen münden. Damit wird das beim Aufstellen der Deckelelemente gegebenenfalls abfließende Wasser abgeleitet.

Die primäre Rinne ist dabei einstückig mit der wulstförmigen Dichtung ausgebildet, und die sekundäre Rinne ist als eine U-förmige Schiene ausgestaltet, welche an einem vorderen Endabschnitt mit der Unterseite eines Deckelelementes verbunden ist. Die wulstförmige Dichtung ist an der U-förmigen Schiene befestigt.

Die DE 44 43 525 C1 beschreibt eine Dachanordnung zum Verschließen eines Dachausschnittes eines Kraftfahrzeuges, bei der eine elastische Dichtung an einem Wasserablauf eines hinteren Dachteiles angeordnet ist und einen einstückig angeformten, elastisch biegsamen Dichtabschnitt aufweist. Der Dichtabschnitt wird durch eine Stoßkante eines beweglichen Dachteiles, abhängig von einer Öffnungs- oder Schließbewegung dieses Dachteiles, zwischen einer entspannten, einen Schwallwasserschutz bildenden, nach oben ausgestellten Ruheposition und einer den Wasserablauf überdeckenden Belastungsposition bewegt.

Eine vordere Stirnseite eines hinteren Lamellendachteiles weist in Verlängerung einer Unterseite einen stegartig nach vorne ragenden Fortsatz auf, dessen freies Stirnende zu einem Aufsteckrand in Richtung eines stegartigen Fortsatzes des anderen Lamellendachteiles nach oben gebogen ist. Durch eine Stirnkante des Lamellendachteiles, den Fortsatz und den Aufsteckrand wird ein winkelartiges Profil gebildet, das eine nach oben offene Rinne für einen Wasserablauf darstellt. Auf den Aufsteckrand des Wasserablaufes ist mittels eines Steckprofiles eine aus Gummi hergestellte elastische Dichtung aufgesteckt und stabil an diesem gehalten. Die elastische Dichtung ist einstückig hergestellt und weist ein Profil auf, das sich über die gesamte Länge des Aufsteckrandes, d.h. über die gesamte Breite des Lamellendachteiles und des entsprechenden Dachausschnittes des Personenkraftwagens erstreckt.

Des weiteren ist aus der DE 197 56 021 C1 ein Fahrzeugdach mit mindestens zwei ausstellbaren und verschiebbaren starren Deckelelementen bekannt. Jedes dieser Deckelelemente weist entlang seinem vorderen Rand ein vorspringendes Dichtungselement auf, das sich im Schließzustand der Deckelelemente unter den hinteren Rand des jeweils nächstvorderen Deckelelementes anlegt. Das Dichtungselement weist vorne eine hochstehende Dichtlippe auf, die zusammen mit einem Dichtungsteil einen nach oben offenen Wasserauffangraum begrenzt. Das in dem Wasserauffangraum angesammelte Wasser kann in bekannter Weise in seitliche Wasserrinnen abgeleitet werden.

Die vorgenannten aus dem Stand der Technik bekannten Dachanordnungen bzw. die zur Abdichtung der einzelnen Dachelemente vorgesehenen Dichtungseinrichtungen weisen allesamt den Nachteil auf, daß die zum Auffangen des sich auf den betreffenden Dachelementen gegebenenfalls befindlichen Wassers vorgesehenen wasserauffangkanäle ihre Funktionsweise nur bis zu einem bestimmten maximalen Schwenkwinkel der Dachelemente bzw. Deckelelemente erfüllen. Mit zunehmendem Schwenkwinkel tritt das in den Wasserauffangkanälen gesammelte Wasser nachteilhafterweise aus und gelangt in den Fahrzeuginnenraum, da diese allesamt U-förmig ausgebildet sind.

Der vorliegenden Erfindung liegt daher die Aufgabe zugrunde, ein Fahrzeugdach der eingangs genannten Art zu schaffen, bei welchem das Eindringen von Wasser in einen Fahrzeuginnenraum, welches insbesondere beim Öffnen des Fahrzeugdaches von einzelnen Dachteilen abläuft, auch bei großen Schwenkwinkeln der Dachteile wirkungsvoll verhindert wird.

Diese Aufgabe wird bei einem Fahrzeugdach mit mindestens zwei festen Dachteilen, die während einer Öffnungsbewegung aufstellbar und nach hinten wegklappbar sind, wobei wenigstens zwischen den Dachteilen an einer Stirnseite eines ersten Dachteiles ein sich in Querrichtung des Dachteiles erstreckendes Dichtprofil vorgesehen ist und das erste Dachteil einen zugeordneten Auffangkanal zum Aufnehmen von während der Bewegung des ersten Dachteiles von diesem abfließenden Wasser aufweist, dadurch gelöst, daß das Dichtprofil im Inneren einen mit dem Auffangkanal in Verbindung stehenden Kanal aufweist, der wenigstens eine Öffnung aufweist, über welche in dem Auffangkanal befindliches Wasser während der Bewegung des ersten Dachteiles in den Kanal geführt wird.

Durch die erfindungsgemäße Ausgestaltung des Dichtprofiles mit dem Kanal steht eine Dichtungsanordnung zur Verfügung, die selbst bei großen Schwenkwinkeln von Dachteilen eine Rinne ausbildet, aus der gesammeltes Wasser während einer Öffnungsbewegung des Fahrzeugdaches nicht in den Innenraum des Fahrzeuges gelangen kann.

Dies wird in vorteilhafter Weise dadurch erreicht, daß von dem Dachteil abfließendes Wasser zunächst in den Auffangkanal gelangt und von dort über die wenigstens eine Öffnung, die in vorteilhafter Weise als ein in Schließposition des ersten Dachteiles einem Fahrzeuginnenraum zugewandter Schlitz ausgebildet sein kann, in den Kanal des Dichtprofiles geführt wird, und selbst bei zunehmendem Schwenkwinkel des Dachteiles nicht mehr aus dem Kanal austreten kann.

Dabei ist berücksichtigt, daß das auf den Dachteilen befindliche Wasser verstärkt zu Beginn eines Öffnungsvorganges von diesen abfließt. Mit der erfindungsgemäßen Ausgestaltung des Dichtprofiles wird vorteilhafterweise ein Austreten des aufgefangenen Wassers vermieden, da ein Eintreten des Wassers in den Kanal möglich ist, aber ein Austreten aufgrund des sich ergebenden wenigstens annähernd spiralförmigen Querschnitts des Dichtprofiles verhindert wird.

Weitere vorteilhafte Ausgestaltungen der Erfindung ergeben sich aus den Unteransprüchen sowie aus der folgenden Zeichnungsbeschreibung. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
In der Zeichnung ist ein Ausführungsbeispiel der Erfindung dargestellt. Dabei zeigt:
- Fig. 1: eine stark schematisierte perspektivische Ansicht eines Fahrzeugs mit zwei festen Dachteilen, die in einer Öffnungsbewegung aufgestellt und nach hinten weggeklappt werden;
- Fig. 2: eine Detailansicht eines Dichtprofiles gemäß dem in Fig. 1 mit R näher bezeichneten Bereich;
- Fig. 3: das Fahrzeugdach in einer stark schematisierten Seitenansicht, wobei der Bereich des Fahrzeugdaches, in welchem das Dichtprofil angeordnet ist, in vergrößerter Einzelansicht dargestellt ist;
- Fig. 4: das Fahrzeugdach in der Seitenansicht gemäß Fig. 3 zu Beginn eines Öffnungsvorganges;
- Fig. 5: ein erstes Dachteil des Fahrzeugdaches gemäß den Fig. 3 und Fig. 4 in schematisierter Seitenansicht, wobei ein Schwenkwinkel des ersten Dachteiles in etwa 90° beträgt;
- Fig. 6: das erste Dachteil in schematisierter Seitenansicht gemäß Fig. 5, wobei der Schwenkwinkel des ersten Dachteiles in etwa 180° beträgt und das Dichtprofil in der zugehörigen Position in vergrößerter Einzelansicht gezeigt ist; und
- Fig. 7: eine ausschnittsweise detailliertere Seitenansicht des Fahrzeugdaches, wobei ein Gestänge des Fahrzeugdaches und vom Dichtprofil wegführende Wasserablaufkanäle dargestellt sind.

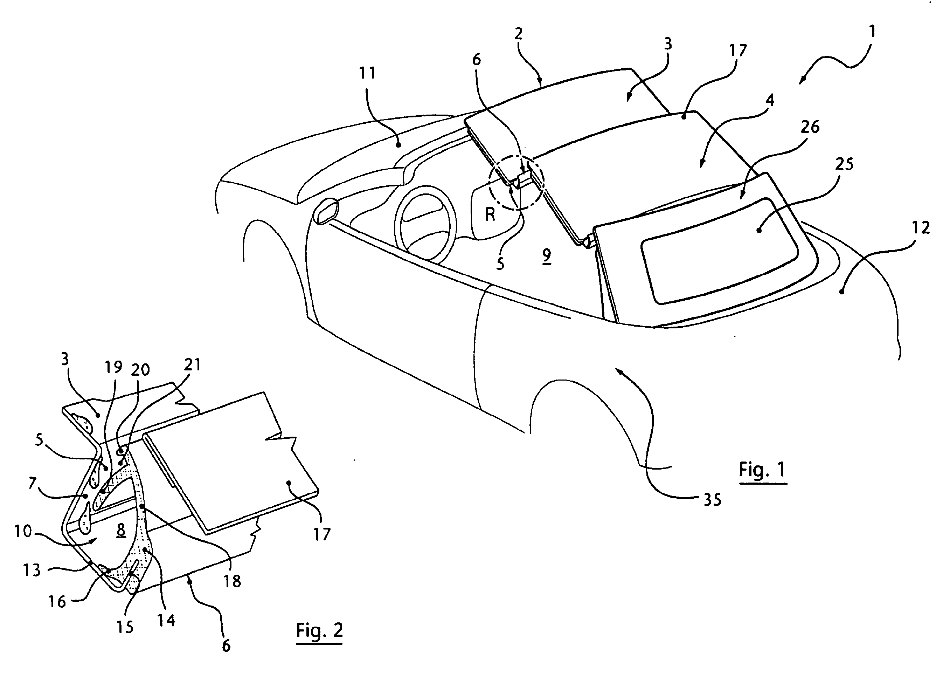

Das in Fig. 1 dargestellte Fahrzeug 1 weist ein in mehreren Teilschritten öffnungsfähiges Fahrzeugdach 2 mit festen Dachteilen 3, 4 auf, die während einer Öffnungsbewegung aufgestellt und nach hinten weggeklappt werden. Zwischen den Dachteilen 3, 4 ist an einer Stirnseite 5 des ersten Dachteiles 3 ein sich in Querrichtung des ersten Dachteiles 3 und damit sich in Fahrzeugquerrichtung erstreckendes Dichtprofil 6 vorgesehen.

In Fig. 2 ist der in Fig. 1 mit R näher bezeichnete Bereich in vergrößerter Detailansicht dargestellt, wobei das erste Dachteil 3 mit einem zugeordneten Auffangkanal 7 zum Aufnehmen von während der Bewegung des ersten Dachteiles von diesem abfließenden Wasser aufweist. Das Dichtprofil 6 weist in seinem Inneren einen mit dem Auffangkanal 7 in Verbindung stehenden und in Schließposition des ersten Dachteiles 3 oberhalb des Auffangkanales 7 angeordneten Kanal 8 auf, der mit einem bei geschlossenem Fahrzeugdach 2 einem Fahrzeuginnenraum 9 zugewandten Schlitz 10 zum Führen von in dem Auffangkanal 7 befindlichen Wasser in den Kanal 8 versehen ist.

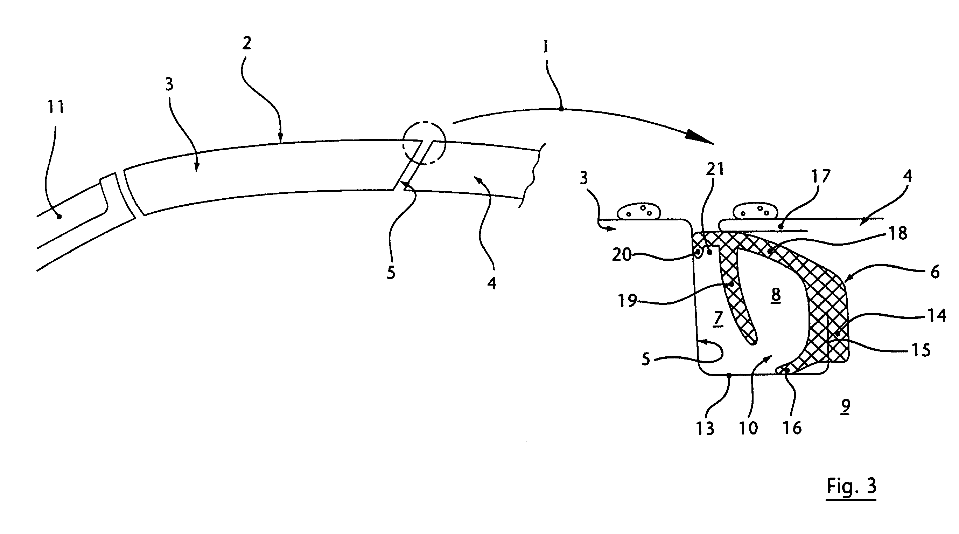

Die Fig. 3 bis Fig. 6 zeigen jeweils eine stark schematisierte Seitenansicht eines Teiles des Fahrzeugdaches 2 während eines Öffnungsvorganges, wobei jeweils zu den einzelnen Öffnungsphasen die korrespondierenden Detailansichten des Dichtungsprofiles 6 in vergrößerter Darstellung gezeigt sind. Die in den Fig. 3 bis Fig. 6 dargestellten Pfeile I bis VI zeigen jeweils die Bewegungsrichtungen des ersten Dachteiles 3 und des zweiten Dachteiles 4 während des Öffnungsvorganges an.

In Fig. 3 ist zunächst die dem Pfeil I entsprechende Bewegungsrichtung der beiden Dachteile 3, 4 gezeigt. Die beiden Dachteile 3, 4 werden zunächst von einer Windschutzscheibe 11 des Fahrzeuges 1 weg in Richtung des Fahrzeughecks 12 bewegt. Das Dichtprofil 6 befindet sich dabei gemäß der in Fig. 3 dargestellten Detailansicht in seiner dichtenden Position zwischen den beiden Dachteilen 3, 4 und stellt eine Abdeckung des rinnenartigen Auffangkanals 7 dar. Das Dichtprofil 6 ist an einem den Auffangkanal 7 ausformenden Fortsatz 13 des ersten Dachteiles 3 angeordnet, wobei es mit einem verdickten Bereich 14 über einen eine Art U-Schenkel darstellenden Steg 15 des Fortsatzes 13 geführt ist bzw. auf diesen aufgesteckt ist und mit einer Lippe 16, welche an dem verdickten Bereich 14 des Dichtprofiles 6 angeformt ist, in den Auffangkanal 7 eingreift. Mit einer den Querschnitt des U-förmigen Auffangkanals übergreifenden ersten Mantelfläche 18 und einer von dieser sich in Richtung des "Bodens" des Auffangkanals 7 erstreckenden und zu dem Boden des Auffangkanals 7 den Schlitz 10 freilassenden zweiten Mantelfläche 19 bildet das Dichtprofil 6 den Kanal 8.

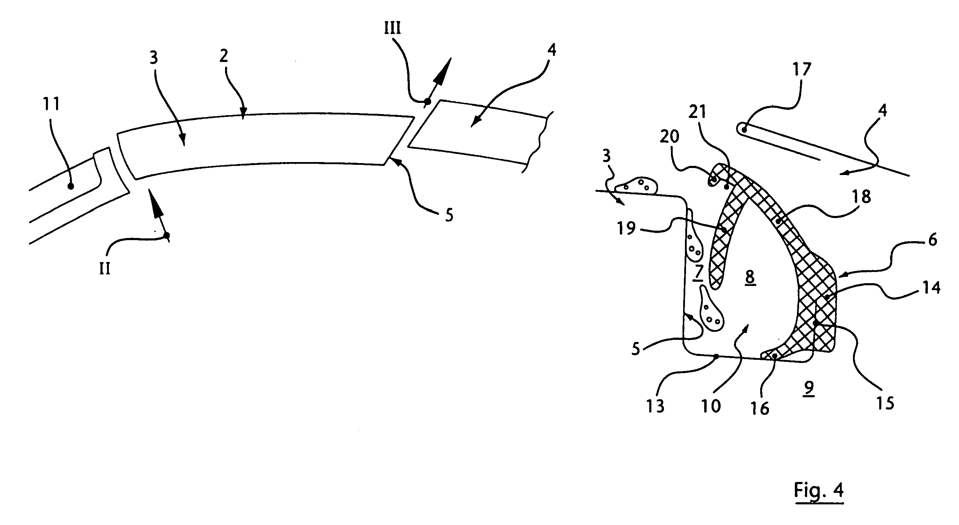

Gemäß den die Bewegungsrichtungen der beiden Dachteile 3, 4 darstellenden Pfeile II, III in Fig. 4 werden die beiden Dachteile 3, 4 bei der Dachöffnung wenigstens annähernd vom Fahrzeuginnenraum 9 leicht schräg nach oben bewegt. Dabei hebt ein plattenförmiger, an der Oberseite des zweiten Dachteiles 4 ausgebildeter, im Querschnitt stegartiger Fortsatz 17 von dem Dichtprofil 6 derart ab, daß der erste Mantelbereich 18 des Dichtprofiles 6, der in Schließposition des Fahrzeugdaches 2 zum Abdichten des Bereiches zwischen den beiden Dachteilen 3, 4 von dem zweiten Dachteil 4 an die Stirnseite 5 des ersten Dachteiles 3 gedrückt ist, von der Stirnseite 5 abhebt und den Auffangkanal 7 wenigstens spaltartig freigibt. Damit kann auf dem ersten Dachteil 3 befindliches Wasser in den Auffangkanal 7 einströmen. Gleichzeitig bildet der erste Mantelbereich 18 einen Schwallspritzschutz für den Innenraum 9 des Fahrzeuges 1.

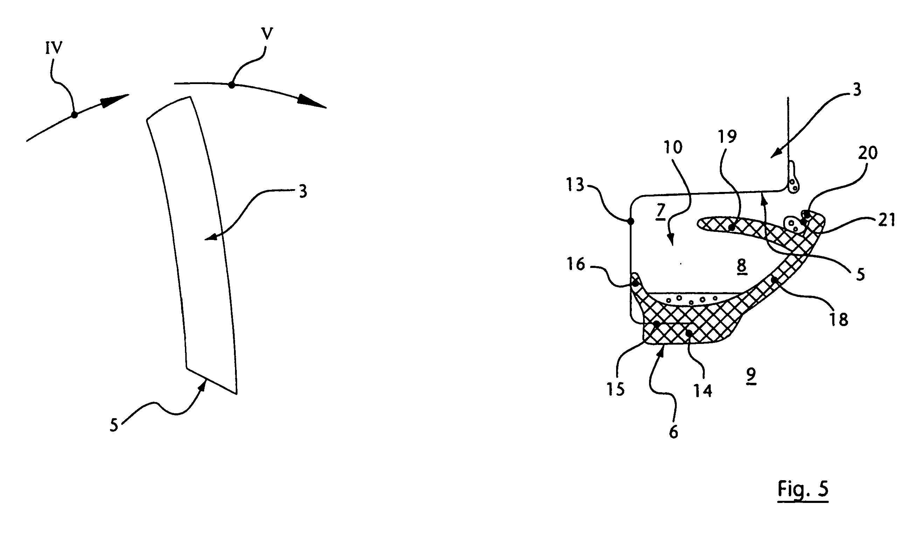

Fig. 5 zeigt das erste Dachteil 3 in einer Schwenkposition von etwa 90° ausgehend von der geschlossenen Stellung, wobei gemäß der Detailansicht des Dichtprofiles 6 das zunächst in den Auffangkanal 7 eingetretene Wasser nunmehr in den Kanal 8 des Dichtprofiles 6 gelangt ist. Da in dieser Position des ersten Dachteiles 3 kein Wasser mehr in den Auffangkanal 7 geführt werden kann, weist der erste Mantelbereich 18 an seinem der Stirnseite 5 des ersten Dachteiles 3 zugewandten Ende eine Dichtlippe 20 auf, die sich in die gleiche Richtung wie der zweite Mantelbereich 19 erstreckt und zusammen mit diesem in einem Schwenkbereich des ersten Dachteiles 3 von etwa 70° bis etwa 200° eine Auffangrinne 21 für auf dem ersten Dachteil 3 befindliches Wasser bildet.

Um nicht übermäßig viel Wasser in den gegenüber dem Auffangkanal 7 und dem Kanal 8 kleineren Auffangrinne 21 zu leiten, kann es vorgesehen sein, vor Erreichen der senkrechten Stellung des ersten Dachteiles 3 die Öffnungsbewegung kurz anzuhalten, damit möglichst viel Wasser in den Auffangkanal 7 und den Kanal 8 gelangen kann.

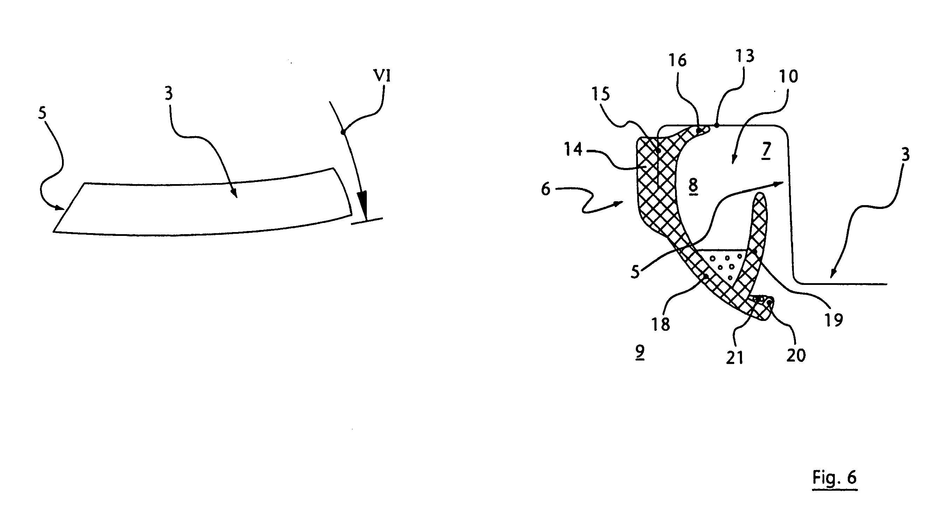

Eine Schwenkposition des ersten Dachteiles, die in etwa einem Schwenkwinkel von 180° entspricht, ist in Fig. 6 dargestellt, wobei sich das zunächst im Auffangkanal 7 gesammelte Wasser nunmehr im Kanal 8 befindet. Dabei stellt ein Verbindungsbereich des ersten Mantelbereiches 18 und des zweiten Mantelbereiches 19 des Dichtprofiles 6 einen Boden des Kanals 8 dar.

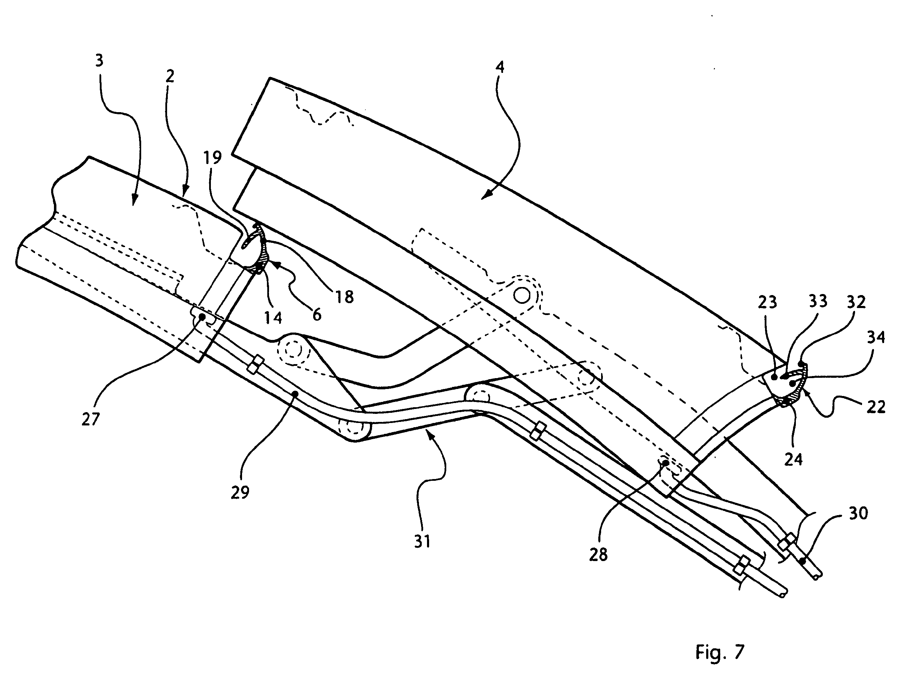

Die vorbeschriebene Wirkungsweise des Dichtprofiles 6, welches an dem ersten Dachteil 3 angeordnet ist, gilt entsprechend für das in Fig. 7 dargestellte weitere Dichtprofil 22, welches an dem zweiten Dachteil 4 angeordnet ist. Auch das zweite Dachteil 4 ist an seinem hinteren Ende mit einem baugleich zu dem Auffangkanal 7 des ersten Dachteiles 3 ausgeführten Auffangkanal 23 versehen. Analog zu der Ausführung des Dichtprofiles 6 weist das weitere Dichtprofil 22 einen durch einen dem Mantelbereich 19 entsprechenden Mantelbereich 33 gebildeten Kanal 34 und eine Dichtlippe 32 auf.

Das weitere Dichtprofil 22 ist auf einen Flansch 24 des Auffangkanales 23 gesteckt und dichtet das zweite Dachteil 4 gegenüber einem in Fig. 1 dargestellten, eine Heckscheibe aufnehmenden hinteren Dachteil 26 ab. Sobald das zweite Dachteil 4 in Bezug auf das hintere Dachteil 26 geöffnet wird, stellt sich das weitere Dichtprofil 22 auf und fängt auf dem zweiten Dachteil 4 befindliches und nach hinten abfließendes Restwasser auf, das in den Auffangkanal 23 des zweiten Dachteiles 4 geleitet wird.

Durch die Krümmung bzw. Wölbung des Fahrzeugdaches 2 wird das Wasser in den Auffangkanälen 7, 23 zu den Fahrzeugaußenseiten geleitet und wird dort über Dichtungsendstücke 27, 28 in beidseitig der Dachteile 3, 4 angeordnete Wasserablaufschläuche 29, 30 bzw. Wasserablaufkanäle, die wiederum mit den Dichtungsendstücken 27, 28 verbunden sind, geführt.

Die entsprechend flexibel gestalteten Wasserablaufschläuche 29, 30 sind seitlich an den Teilen eines Gestänges 31 des Fahrzeugdaches 2 befestigt und in geeigneter Art und Weise an einer in Fig. 1 dargestellten Karosserie 35 geführt bzw. in diese hineingeleitet und durch diese hindurchgeführt.

Sobald die Dachteile 3, 4 während der Öffnungsbewegung eine annähernd senkrechte Stellung durchlaufen, kann das in den Auffangkanälen bzw. in dem Kanal 8 befindliche Wasser nicht mehr über die Wasserablaufschläuche 29, 30 abgeführt werden, da die Auffangkanäle 7, 23 in der Fahrzeugmitte aufgrund ihrer Krümmung tiefer als der Übergang der Dichtungsendstücke in die Wasserablaufschläuche angeordnet sind. Sofern die Teilungslinie der beiden Dachteile 3, 4 nicht senkrecht zu der Fahrzeugmittenebene verläuft, kann dieser Punkt auch vor oder nach der senkrechten Stellung der Dachteile 3, 4 liegen. Bei geöffnetem Fahrzeugdach 2 verdunstet in den Auffangkanälen 7, 23 bzw. den Kanälen 8, 34 verbleibendes Restwasser in einem nicht näher dargestellten Dachablageraum des Fahrzeugs 1.

Nicht mehr rechtzeitig in die Wasserablaufschläuche 29, 30 abfließendes Wasser wird von den Kanälen 8, 34 aufgenommen. Sofern die Auffangkanäle 7, 23 bzw. die Kanäle 8, 34 entsprechend groß dimensioniert sind, kann gegebenenfalls auf die Wasserablaufschläuche 29, 30 verzichtet werden.

Abweichend von dem in den Fig. 1 bis Fig. 7 dargestellten Ausführungsbeispiel des Auffangkanales in Verbindung mit einem Dichtprofil kann es selbstverständlich im Ermessen des Fachmannes auch vorgesehen sein, daß der Auffangkanal einstückig mit dem Dichtprofil ausgebildet ist und das Dichtprofil direkt an einer Stirnseite eines Dachteiles befestigt ist.

### Bezugszeichen

- 1: Fahrzeug
- 2: Fahrzeugdach
- 3: erstes Dachteil
- 4: zweites Dachteil
- 5: Stirnseite
- 6: Dichtprofil
- 7: Auffangkanal
- 8: Kanal
- 9: Fahrzeuginnenraum
- 10: Öffnung, Schlitz
- 11: Windschutzscheibe
- 12: Fahrzeugdach
- 13: Fortsatz
- 14: verdickter Bereich
- 15: Steg
- 16: Lippe
- 17: stegartiger Fortsatz
- 18: erster Mantelbereich
- 19: zweiter Mantelbereich
- 20: Dichtlippe
- 21: Auffangrinne
- 22: weiteres Dichtprofil
- 23: weiterer Auffangkanal
- 24: Flansch
- 25: Heckscheibe
- 26: hinteres Dachteil
- 27, 28: Dichtungsendstück
- 29, 30: Wasserablaufschlauch
- 31: Gestänge
- 32: weitere Dichtlippe
- 33: weiterer zweiter Mantelbereich
- 34: weiterer Kanal
- 35: Karosserie

## Patentansprüche

1. Fahrzeugdach (2) mit mindestens zwei festen Dachteilen (3, 4), die während einer Öffnungsbewegung aufstellbar und nach hinten wegklappbar sind, wobei wenigstens zwischen den Dachteilen (3, 4) an einer Stirnseite (5) eines ersten Dachteiles (3) ein sich in Fahrzeugquerrichtung erstreckendes Dichtprofil (6) vorgesehen ist und das erste Dachteil (3) einen zugeordneten Auffangkanal (7) zum Aufnehmen von während der Bewegung des ersten Dachteiles (3) von diesem abfließenden Wasser aufweist,
**dadurch gekennzeichnet,**
**daß** das Dichtprofil (6) im Inneren einen mit dem Auffangkanal (7) in Verbindung stehenden Kanal (8) aufweist, der wenigstens eine Öffnung (10) aufweist, über welche in dem Auffangkanal (7) befindliches Wasser während der Bewegung des ersten Dachteiles (3) in den Kanal (8) des Dichtprofils (6) geführt wird.

2. Fahrzeugdach nach Anspruch 1,
**dadurch gekennzeichnet,**
**daß** die Öffnung (10) als ein in Schließposition des ersten Dachteiles (3) einem Fahrzeuginnenraum (9) zugewandter Schlitz ausgebildet ist.

3. Fahrzeugdach nach Anspruch 1 oder 2,
**dadurch gekennzeichnet,**
**daß** ein Teil des Dichtprofiles (6) wenigstens teilweise eine Abdeckung des Auffangkanals (7) darstellt.

4. Fahrzeugdach nach Anspruch 1, 2 oder 3,
**dadurch gekennzeichnet,**
**daß** das Dichtprofil (6) an einem Fortsatz (13) des ersten Dachteiles (3) angeordnet ist.

5. Fahrzeugdach nach Anspruch 4,
**dadurch gekennzeichnet,**
**daß** der Fortsatz (13) des ersten Dachteiles (3) den Auffangkanal (7) darstellt.

6. Fahrzeugdach nach einem der Ansprüche 1 bis 5,
**dadurch gekennzeichnet,**
**daß** der Auffangkanal (7) einstückig mit dem Dichtprofil (6) ausgebildet ist.

7. Fahrzeugdach nach einem der Ansprüche 1 bis 6,
**dadurch gekennzeichnet,**
**daß** das Dichtprofil (6) einen ersten Mantelbereich (18) aufweist, der in Schließposition des ersten Dachteiles (3) zum Abdichten des Bereiches zwischen den beiden Dachteilen (3, 4) von dem zweiten Dachteil (4) an die Stirnseite (5) des ersten Dachteiles (3) gedrückt ist.

8. Fahrzeugdach nach Anspruch 7,
**dadurch gekennzeichnet,**
**daß** das Dichtprofil (6) einen sich vom ersten Mantelbereich (18) in Richtung des Auffangkanals (7) erstreckenden zweiten Mantelbereich (19) aufweist, der zusammen mit dem ersten Mantelbereich (18) den Kanal (8) des Dichtprofils (6) begrenzt.

9. Fahrzeugdach nach Anspruch 8,
**dadurch gekennzeichnet,**
**daß** die Öffnung (10) zwischen einem freien Ende des zweiten Mantelbereiches (19) und einer Unterseite des Auffangkanals (7) ausgebildet ist.

10. Fahrzeugdach nach einem der Ansprüche 1 bis 9,
**dadurch gekennzeichnet,**
**daß** der Auffangkanal (7) und der Kanal (8) des Dichtprofils (6) im Bereich der Fahrzeugaußenseiten Dichtungsendstücke (27) aufweist, welche mit Wasserablaufkanälen (29) verbunden sind, die an Teilen eines Gestänges (31) befestigt sind und deren freie Enden wenigstens an eine Fahrzeugkarosserie (35) geführt sind.

11. Fahrzeugdach nach einem der Ansprüche 7 bis 10,
**dadurch gekennzeichnet,**
**daß** der erste Mantelbereich (18) in seinem Anlagebereich an der Stirnseite (5) des ersten Dachteiles (3) eine in Schließposition des ersten Dachteiles (3) in Richtung des Fahrzeuginnenraumes (9) ragenden Dichtlippe (20) aufweist, die zusammen mit dem ersten Mantelbereich (18) in einem bestimmten Schwenkbereich des ersten Dachteiles (3) eine Auffangrinne (21) für Wasser darstellt.

## Claims

1. A vehicle roof (2) having at least two solid roof parts (3, 4), which, during an opening movement, can be positioned and can be folded away to the rear, whereby, at least between the roof parts (3, 4), a sealing profile (6), extending in the vehicle transverse direction, is provided at a face side (5) of a first roof part (3) and the first roof part (3) has an associated collection channel (7) for receiving water which flows from it during the movement of the first roof part (3),
**characterised in that**
the sealing profile (6) has, inwardly, a channel (8) which is connected to the collection channel (7), which channel (8) has at least one opening (10), via which water which is located in the collection channel (7) is guided into the channel (8) of the sealing profile (6) during the movement of the first roof part (3).

2. The vehicle roof according to Claim 1,
**characterised in that**
the opening (10) is configured as a slot which faces a vehicle interior space (9) in the closed position of the first roof part (3).

3. The vehicle roof according to Claim 1 or 2,
**characterised in that**
a part of the sealing profile (6) forms, at least partially, a cover for the collection channel (7).

4. The vehicle roof according to Claim 1, 2 or 3,
**characterised in that**
the sealing profile (6) is arranged at a prolongation (13) of the first roof part (3).

5. The vehicle roof according to Claim 4,
**characterised in that**
the prolongation (13) of the first roof part (3) forms the collection channel (7).

6. The vehicle roof according to one of Claims 1 to 5,
**characterised in that**
the collection channel (7) is integrally configured with the sealing profile (6).

7. The vehicle roof according to one of Claims 1 to 6,
**characterised in that**
the sealing profile (6) has a first casing area (18), which, In the closed position of the first roof part (3), In order to seal the area between the two roof parts (3, 4), is pressed by the second roof part (4) at the face side (5) of the first roof part (3).

8. The vehicle roof according to Claim 7,
**characterised in that**
the sealing profile (6) has a second casing area (19) extending from the first casing area (18) in the direction of the collection channel (7), which second casing area (19), together with the first casing area (18), delimits the channel (8) of the sealing profile (6).

9. The vehicle roof according to Claim 8,
**characterised in that**
the opening (10) is configured between a free end of the second casing area (19) and an underside of the collection channel (7).

10. The vehicle roof according to one of Claims 1 to 9,
**characterised in that**
the collection channel (7) and the channel (8) of the sealing profile has sealing end pieces (27) in the area of the vehicle outer sides, which sealing end pieces (27) are connected to water drainage channels (29), which are secured at parts of a rod (31), and the free ends of which are guided at least at a vehicle body (35).

11. The vehicle roof according to one of Claims 7 to 10,
**characterised in that**
the first casing area (18), in the area where it abuts the face side (5) of the first roof part (3), has a sealing lip (20) which, in the closed position of the first roof part (3), protrudes in the direction of the vehicle interior space (9), which sealing lip (20), together with the first casing area (18) in a particular pivot area of the first roof part (3), forms a collection groove (21) for water.

## Revendications

1. Toit de véhicule (2) comprenant au moins deux éléments de toit rigides (3, 4), qui peuvent être redressés au cours d'un mouvement d'ouverture et rabattus vers l'arrière, un profilé d'étanchéité (6) s'étendant dans la direction transversale du véhicule étant prévu au moins entre les éléments de toit (3, 4) au niveau d'un côté frontal (5) d'un premier élément de toit (3) et le premier élément de toit (3) présentant un canal collecteur (7) associé pour recevoir l'eau s'écoulant du premier élément de toit (3) au cours de son déplacement,
**caractérisé en ce que**
le profilé d'étanchéité (6) présente, à l'intérieur, un canal (8) en liaison avec le canal collecteur (7), qui présente au moins une ouverture (10) par le biais de laquelle l'eau se trouvant dans le canal collecteur (7) est guidée dans le canal (8) du profilé d'étanchéité (6) au cours du déplacement du premier élément de toit (3).

2. Toit de véhicule selon la revendication 1,
**caractérisé en ce que**
l'ouverture (10) est réalisée sous la forme d'une fente tournée vers un habitacle du véhicule (9) dans la position de fermeture du premier élément de toit (3).

3. Toit de véhicule selon la revendication 1 ou 2,
**caractérisé en ce**
**qu'**une partie du profilé d'étanchéité (6) constitue au moins en partie un recouvrement du canal collecteur (7).

4. Toit de véhicule selon la revendication 1, 2 ou 3,
**caractérisé en ce que**
le profilé d'étanchéité (6) est disposé sur une avancée (13) du premier élément de toit (3).

5. Toit de véhicule selon la revendication 4,
**caractérisé en ce que**
l'avancée (13) du premier élément de toit (3) constitue le canal collecteur (7).

6. Toit de véhicule selon l'une quelconque des revendications 1 à 5,
**caractérisé en ce que**
le canal collecteur (7) est réalisé d'une seule pièce avec le profilé d'étanchéité (6).

7. Toit de véhicule selon l'une quelconque des revendications 1 à 6,
**caractérisé en ce que**
le profilé d'étanchéité (6) présente une première région d'enveloppe (18) qui est pressée par le deuxième élément de toit (4) contre le côté frontal (5) du premier élément de toit (3) dans la position de fermeture du premier élément de toit (3) en vue de réaliser l'étanchéité de la région entre les deux éléments de toit (3, 4).

8. Toit de véhicule selon la revendication 7,
**caractérisé en ce que**
le profilé d'étanchéité (6) présente une deuxième région d'enveloppe (19) s'étendant depuis la première région d'enveloppe (18) dans la direction du canal collecteur (7), qui limite conjointement avec la première région d'enveloppe (18) le canal (8) du profilé d'étanchéité (6).

9. Toit de véhicule selon la revendication 8,
**caractérisé en ce que**
l'ouverture (10) est réalisée entre une extrémité libre de la deuxième région d'enveloppe (19) et un côté inférieur du canal collecteur (7).

10. Toit de véhicule selon l'une quelconque des revendications 1 à 9,
**caractérisé en ce que**
le canal collecteur (7) et le canal (8) du profilé d'étanchéité présente dans la région des côtés extérieurs du véhicule des embouts d'étanchéité (27) qui sont connectés aux canaux d'écoulement d'eau (29), qui sont fixés à des parties d'une tringlerie (31), et dont les extrémités libres sont guidées au moins sur une carrosserie du véhicule (35).

11. Toit de véhicule selon l'une quelconque des revendications 7 à 10,
**caractérisé en ce que**
la première région d'enveloppe (18) présente dans sa région d'appui contre le côté frontal (5) du premier élément de toit (3) une lèvre d'étanchéité (20) saillant dans la direction de l'habitacle du véhicule (9) dans la position de fermeture du premier élément de toit (3), qui constitue, conjointement avec la première région d'enveloppe (18), dans une région de pivotement déterminée du premier élément de toit (3), une rigole de collecte de l'eau (21).
